# FASCICULE DE BREVET EUROPEEN

(11) **EP 0 638 463 B1**
(45) Date de publication et mention de la délivrance du brevet: **25.09.1996**
(21) Numéro de dépôt: 94401667.4
(22) Date de dépôt: 20.07.1994
(51) Int. Cl.: B60J 10/00, B60R 13/04, B60R 13/06

(54) **Dispositif d'étanchéité du type comprenant un élément de fixation sur un support du bâti ou de la caisse d'un véhicule automobile et un élément d'étanchéité**
Dichtungsvorrichtung des Typs verwendend ein Befestigungselement auf einem Kraftfahrzeuguntergestell- oder Aufbauanlage und ein Dichtungselement
Sealing device of the type having a fixation element on a support or frame of a motor-vehicle and a sealing element

(30) Priorité: 09.08.1993 FR 9309775
(43) Date de publication de la demande: 15.02.1995
(73) Titulaire: HUTCHINSON, F-75008 Paris (FR)
(72) Inventeur: Guillon, Henri, F-45700 Villemandeur (FR)
(74) Mandataire: Doireau, Marc

(56) Documents cités:
- EP-A- 0 301 942
- FR-A- 2 208 437
- GB-A- 2 202 889

## Description

La présente invention concerne un dispositif d'étanchéité du type comprenant un élément de fixation sur un support du bâti ou de la caisse d'un véhicule automobile et un élément d'étanchéité avec lequel est propre à coopérer une partie mobile du véhicule, ledit élément de fixation incorporant une armature métallique et ayant une forme de pince à section droite en U délimitant deux ailes en vis-à-vis et un dos.

D'une manière générale, un tel dispositif d'étanchéité doit normalement épouser des parties incurvées du support sur lequel il est destiné à être monté par son élément de fixation, ces parties incurvées ayant un rayon de courbure plus ou moins prononcé. En d'autres termes, le dispositif d'étanchéité doit pouvoir être galbé et/ou cintré pour que son élément de fixation puisse suivre le profil de son support.

Le galbage et/ou le cintrage sont généralement des opérations délicates à réaliser, notamment du fait de la présence de l'armature métallique de renfort qui s'étend non seulement dans le dos mais également dans les ailes de l'élément de fixation.

En outre, lors d'une opération de cintrage par exemple, les deux ailes de l'élément de fixation du dispositif d'étanchéité ont tendance à s'écarter l'une de l'autre. Il faut bien évidemment s'opposer à un tel écartement, ce qui nécessite de recourir à un outillage spécial.

Le but de l'invention est de concevoir un dispositif d'étanchéité du type précité, mais dont la structure permet notamment de simplifier l'outillage jusque-là nécessaire pour effectuer des opérations de cintrage et/ou de galbage sur le dispositif d'étanchéité.

A cet effet, l'invention propose un dispositif du type précité et tel que décrit dans GB-A-2 202 889, qui est caractérisé en ce que la présence de l'armature métallique est limitée au dos de l'élément de fixation.

Selon un mode de réalisation de l'invention, dans lequel l'élément d'étanchéité, tel qu'un élément tubulaire profilé, est adjacent à l'une des deux ailes où aile interne de l'élément de fixation, l'armature métallique est orientée d'une manière telle que ladite aile interne est sensiblement entièrement située d'un même côté par rapport au plan de symétrie longitudinal de ladite armature.

Ainsi, en réalisant une opération de cintrage suivant le plan de symétrie longitudinal de l'armature métallique, il suffit d'obliger l'aile externe de l'élément de maintien à revenir vers l'intérieur pour compenser l'écart qui tend à se produire entre les deux ailes de l'élément de maintien. Au cours de cette opération, l'armature métallique est déformée de manière à ramener sensiblement son plan de symétrie longitudinal vers le plan médian de l'élément de fixation du dispositif d'étanchéité.

Concrètement, une telle opération de cintrage est facilitée par l'absence d'armature métallique dans les deux ailes de l'élément de fixation du dispositif d'étanchéité. D'une manière générale, l'élément de fixation est en un matériau élastomère ou plastomère, et pour réaliser une opération de cintrage, il suffit de chauffer la partie à cintrer pour la ramollir, de la cintrer suivant un rayon de courbure donné et de la tremper ensuite pour qu'elle conserve sa forme.

Ainsi, conformément au dispositif d'étanchéité selon l'invention, l'absence de l'armature métallique dans les ailes de l'élément de fixation et une orientation particulière de l'armature située seulement dans le dos de l'élément de maintien, ne nécessitent pas un outillage complexe pour réaliser notamment une opération de cintrage.

En outre, l'absence de l'armature métallique dans les ailes de l'élément de fixation offre également l'avantage d'alléger le dispositif d'étanchéité, allègement qui est globalement toujours recherché dans ce type de dispositif.

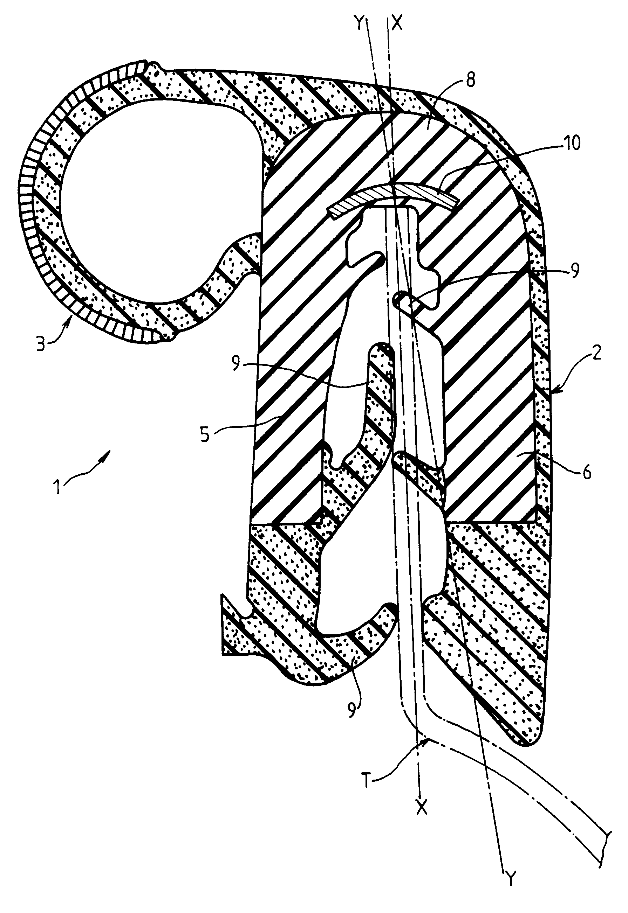

D'autres avantages, caractéristiques et détails de l'invention ressortiront de la description explicative qui va suivre faite en référence au dessin annexé, donné uniquement à titre d'exemple et qui est une vue en coupe transversale d'un dispositif d'étanchéité selon un mode préférentiel de réalisation.

En se reportant sur le dessin, un dispositif d'étanchéité 1 selon l'invention comprend un élément de fixation 2 formant pince à section droite en U pour le fixer sur un support T tel qu'une tôle du bâti ou de la caisse d'un véhicule automobile, et un élément d'étanchéité 3 élastiquement déformable propre à coopérer avec une partie mobile du véhicule.

L'élément de fixation 2 comporte deux ailes dénommées respectivement interne 5 et externe 6 situées en vis-à-vis l'une de l'autre et qui sont réunies par un dos 8. La paroi interne de chaque aile 5 et 6 supporte au moins une lèvre 9 destinée à venir au contact du support T pour assurer la fixation de l'élément 2.

Dans l'exemple illustré sur le dessin, l'élément d'étanchéité 3 est un profilé tubulaire qui est destiné à procurer l'étanchéité requise à l'eau d'une part, et contribuer à l'isolation phonique d'autre part. L'élément d'étanchéité 3 prolonge latéralement vers l'extérieur l'aile interne 5 dans la partie de celle-ci qui est adjacente au dos 8.

La structure de l'élément de fixation 2 est complétée par une armature métallique 10 qui sert à le rigidifier, mais comme cela est clairement visible sur le dessin, la présence de cette armature 10 est limitée au dos 8 de l'élément de fixation 2.

L'armature 10 est noyée dans le dos 8 de l'élément de fixation 2 en étant orientée d'une manière dissymétrique par rapport au plan médian passant entre les deux ailes 5 et 6, plan qui est matérialisé par l'axe X-X. Dans le mode de réalisation illustré sur le dessin, l'armature 10 est orientée de manière à ce que l'aile interne 5 de l'élément de fixation 2 soit sensiblement entièrement située d'un même côté par rapport au plan de symétrie longitudinal de l'armature 10 et qui est matérialisé sur le dessin par l'axe de symétrie Y-Y.

Le dispositif d'étanchéité 1 est réalisé en un matériau élastomère ou plastomère. A titre d'exemple, le dos 8 et les deux ailes 5 et 6 de l'élément de fixation 2 peuvent être réalisés en un caoutchouc dur pour leur donner une certaine rigidité, et l'élément d'étanchéité 3 peut être réalisé en un caoutchouc cellulaire. La fabrication du dispositif d'étanchéité 1 se fait par exemple par coextrusion des deux matériaux précités. Dans le mode de réalisation illustré sur le dessin, les extrémités libres des deux ailes 5 et 6 de l'élément de fixation 2 sont réalisées en caoutchouc cellulaire, avec une couche de ce matériau qui recouvre la paroi externe de l'aile 6.

Comme cela a été explicité en préambule, le dispositif d'étanchéité 1 doit épouser du mieux possible le profil de son support T, si bien qu'il est amené à être cintré par exemple pour suivre un profil courbe du support T. Pour effectuer ce cintrage, on chauffe la partie de l'élément de fixation 2 à cintrer pour la ramollir, on cintre l'élément de fixation 2 suivant le plan longitudinal de symétrie de l'armature 10 en ramenant l'aile externe 6 vers l'aile interne 5 pour compenser l'écart qui tend à se produire entre les deux ailes 5 et 6, puis on trempe dans l'eau la partie ainsi cintrée pour durcir à nouveau le matériau afin qu'il conserve la forme qui lui a été donnée.

Un tel dispositif s'applique notamment dans le domaine automobile, l'élément d'étanchéité 3 étant notamment propre à coopérer avec une partie du véhicule, comme une porte, un capot de moteur ou de coffre, ou analogue.

## Revendications

1. Dispositif d'étanchéité (1) du type comprenant un élément de fixation (2) sur un support (T) du bâti ou de la caisse d'un véhicule automobile et un élément d'étanchéité (3) avec lequel est propre à coopérer une partie mobile du véhicule, ledit élément de fixation (2) incorporant une armature métallique (10) et ayant une forme de pince à section droite en U délimitant deux ailes (5,6) en vis-à-vis et un dos (8), l'armature métallique (10) étant cintrée et noyée dans le dos (8) en étant disposée d'une manière dissymétrique par rapport au plan médian séparant les deux ailes (5,6) de l'élément de fixation (2), caractérisé en ce que la présence de l'armature métallique (10) est limitée au dos (8) de l'élément de fixation (2).

2. Dispositif d'étanchéité selon la revendication 1, dans lequel l'élément d'étanchéité (3), tel qu'un élément tubulaire profilé, est adjacent à l'une des deux ailes ou aile interne (5) du dispositif d'étanchéité, caractérisé en ce que ladite aile interne (5) est sensiblement entièrement située d'un même côté par rapport au plan longitudinal de symétrie de ladite armature (10).

3. Dispositif d'étanchéité selon la revendication 1 ou 2, caractérisé en ce que le dos (8) et les deux ailes (5,6) de l'élément de fixation (2) sont réalisés en un caoutchouc dur.

4. Dispositif d'étanchéité selon l'une quelconque des revendications 1 à 3, caractérisé en ce que lors d'une opération de cintrage dudit dispositif, la partie à cintrer est chauffée, puis déformée et trempée dans l'eau pour conserver la forme donnée après cintrage.

## Claims

1. Sealing device (1) of the type comprising an element (2) for fixing to a support (T) of the frame or the body of a motor vehicle and a sealing element (3) with which a movable part of the vehicle can cooperate, the said fixing element (2) incorporating a metallic armature (10) and being a clip shape with a U-shaped cross section defining two wings (5,6) facing each other and a back (8), said metallic armature (10) being arched and embedded in the back (8) while being asymmetrically disposed with respect to the central plane separating the two wings (5,6) of the fixing element (2), characterized in that the presence of the metallic armature (10) is confined to the back (8) of the fixing element (2).

2. Sealing device according to claim 1, in which the sealing element (3), such as a tubular profiled element, is adjacent to one of the two wings or inner wing (5) of the sealing device, characterized in that the said inner wing (5) is substantially completely located on one side with respect to the longitudinal plane of symmetry of the said armature (10).

3. Sealing device according to claim 1 or 2, characterized in that the back (8) and the two wings (5,6) of the fixing element (2) are produced in a hard rubber.

4. Sealing device according to any of claims 1 to 3, characterized in that in an arching operation of the said device, the part to be arched is heated, then deformed and tempered in water to keep the shape given after arching.

## Patentansprüche

1. Abdichtungsvorrichtung (1) der Art, die ein Element (2) der Befestigung auf einem Träger (T) des Utersatzes bzw. Rahmengestells oder des Wagenkastens eines Kraftfahrzeugs und ein Abdichtungselement (3), mit dem ein bewegliches Teil des Fahrzeugs zum Zusammenwirken geeignet ist, umfaßt, wobei das Element (2) der Befestigung eine metallische Armatur (10) eingebaut und eine Klemmenform mit U-Querschnitt hat, die zwei gegenübersliegende Flügel (5,6) und einen Steg (8) begrenzt, wobei die metallische Armatur (10) gebogen und in dem Steg (8) versenkt ist, indem sie in einer unsymmetrischen Art und Weise mit Bezug auf die Mittelebene, welche die beiden Flügel (5,6) des Elements (2) der Befestigung trennt, angeordnet ist, dadurch **gekennzeichnet**, daß das Vorhandensein der metallischen Armatur (10) auf den Steg (8) des Elements (2) der Befestigung beschränkt ist.

2. Abdichtungsvorrichtung nach Anspruch 1, in welcher das Abdichtungselement (3), wie ein profiliertes rohrförmiges Element, benachbart von dem einen der beiden Flügel oder dem inneren Flügel (5) der Abdichtungsvorrichtung, ist, dadurch **gekennzeichnet**, daß sich der genannte innere Flügel (5) im wesentlichen vollständig auf einer selben Seite bezüglich der Längssymmetrieebene der genannten Armatur (10) befindet.

3. Abdichtungsvorrichtung nach Anspruch 1 oder 2, dadurch **gekennzeichnet**, daß der Steg (8) und die beiden Flügel (5,6) des Elements (2) der Befestigung aus hartem Kautschuk hergestellt sind.

4. Abdichtungsvorrichtung nach irgendeinem der Ansprüche 1 bis 3, dadurch **gekennzeichnet**, daß während eines Vorgangs des Biegens der genannten Vorrichtung der zu biegende Teil erhitzt, dann deformiert und im Wasser abgeschreck wird, um die gegebene Form nach dem Biegen beizubehalten.
